# EUROPEAN PATENT SPECIFICATION

(11) **EP 2 920 005 B1**
(45) Date of publication and mention of the grant of the patent: **17.07.2019**
(21) Application number: 13854414.3
(22) Date of filing: 08.05.2013
(51) Int. Cl.: B60B 19/00, B60B 5/00

(54) **WHEEL ASSEMBLY AND VEHICLE INCORPORATING SAME**
RADANORDNUNG UND FAHRZEUG DAMIT
ENSEMBLE ROUE ET VÉHICULE CONTENANT CELLE-CI

(30) Priority: 14.11.2012 US 201213676790
(43) Date of publication of application: 23.09.2015
(73) Proprietor: Shark Wheel LLC, Lake Forest, CA 92630 (US)
(72) Inventor: PATRICK, David, Michael, Playa Del Rey, CA 90293 (US)
(74) Representative: Hocking, Adrian Niall
(86) International application number: PCT/US2013/040213
(87) International publication number: WO 2014/077894

(56) References cited:
- RU-C1- 2 414 360
- RU-C1- 2 438 879
- RU-C1- 2 438 879
- SU-A1- 384 697
- US-A- 907 991
- US-A- 1 779 994
- US-A- 3 064 796
- US-A- 3 913 981
- US-A- 3 913 981
- US-A1- 2004 089 385
- US-A1- 2010 148 570
- US-A1- 2011 233 991

## Description

This application claims the benefit of U.S. Application No. 13/676,790, filed November 14, 2012.

### FIELD OF THE INVENTION

The present invention relates generally to wheels and, more particularly, to wheels configured to be used on a variety of terrains and surfaces.

### BACKGROUND OF THE INVENTION

A wheel, in the simplest terms, is a circular component that rotates on an axle. The main advantage of a wheel is that it greatly reduces friction by rolling across a flat surface compared to sliding or dragging an object. Early wheels were simple wooden disks with a hole for an axle. At first, a cross section of a tree was used. However, this type of wheel was problematic because it did not have sufficient structural strength to support weight without breaking. It was inherently flawed because a cross section of a tree does not utilize the strength of the grain of wood, like a plank cut lengthwise. Eventually, to strengthen the wheel, three lengthwise cut planks were banded together side by side, with the axle hole bored through the centerpiece, and shaped into a circle.

Subsequently, the wheel evolved to the blueprint of the modem wheel comprising of a hub, spokes, and a rim. The advent of spokes made the wheel lighter and stronger than a solid wheel, and used less material. Further advances made to the spokes and rims resulted in wheels becoming lighter and faster. Subsequently, to prolong the durability of a wheel, covers for wheel, known today as tires, were developed as a measure to protect the wheel from damage. Initially, tires were made of simple materials such as leather, but progressed to other more durable materials such as iron and rubber.

Nonetheless, the overall circular shape has remained the same throughout the years. Presently, refinements in a wheel design have primarily been based on advancements in materials as well as, on designs adapted for specific uses, to include specific types of surfaces. US907991 and US177994 disclose a traction wheel and a tractor wheel respectively. US3064796 discloses a roller for supporting belts of endless belt conveyors, and RU2438879 discloses a wheel to be used as teaching aids and in the gaming and entertainment industry.

It should, therefore, be appreciated that there remains a need for a wheel assembly that is effective across a variety of surfaces. The present invention fulfills this need and others.

### SUMMARY OF THE INVENTION

Briefly, and in general terms, the invention is defined in its broadest terms in claims 1, 6 and 12 below, and provides a wheel assembly having a body formed as an alternating pattern circumscribed about a central hub. The body has a constant radial distance from the axis of rotation, as referenced by a median circle centered on the axis of rotation and defined by the body's alternating pattern.

More particularly, by way of example only and not limitation, the wheel can be adapted for use in any type of vehicle for transportation, such as a car, bicycle, skateboard, and wheelchair, among others. The wheel body defines an effective width (We) greater than a body width (Wb). On hard surfaces, the wheel assembly can provide a broad track while maintaining a relatively thin contact area in that the wheel assembly generates less friction than a traditional wheel with a comparable effective width. On soft surfaces, e.g., sand, the broad travel path of the wheel assembly enables the vehicle to travel smoothly without unduly sinking into soft material, providing substantial traction, particularly if the wheel begins to slip.

In a detailed aspect of an exemplary embodiment, the wheel body is formed of a plurality of arcs connected in sequential, adjacent alignment to circumscribe the central hub. Each arc having an arc center that is spaced apart from the axis of rotation, such that adjacent arcs have arc center on opposing sides of the body.

In another detailed aspect of an exemplary embodiment, each arc of the plurality of arcs has an arc angle of 90 degrees, in which the alternating pattern is formed of six arcs.

For purposes of summarizing the invention and the advantages achieved or implemented over the prior art, certain advantages of the invention have been described herein. Of course, it is to be understood that not necessarily all such advantages may be achieved or implemented in accordance with any particular embodiment of the invention. Thus, for example, those skilled in the art will recognize that the invention may be embodied or carried out in a manner that achieves, optimizes, or implements one advantage or group of advantages as taught herein without necessarily achieving or implementing other advantages as may be taught or suggested herein.

All of these embodiments are intended to be within the scope of the invention herein disclosed. These and other embodiments of the present invention will become readily apparent to those skilled in the art from the following detailed description of the preferred embodiments having reference to the attached figures, the invention not being limited to any particular preferred embodiment disclosed.

### BRIEF DESCRIPTION OF THE DRAWINGS

Embodiments of the present invention will now be described, by way of example only, with reference to the following drawings in which:
FIG. 1 is a side perspective view of a vehicle incorporating wheel assemblies in accordance with the invention.
FIG. 2 is a front perspective view of the vehicle of FIG. 1.
FIG. 3 is a side perspective view of the wheel body of the vehicle of FIG. 1.
FIG. 4 is a front perspective view of the wheel body of FIG. 3.
FIG. 5 is a perspective view of a prior art wheel and its path, traveling through sand.
FIG. 6 is a perspective view of the wheel assembly of FIG. 3, further depicting its path traveling through sand.
FIG. 7 is a front perspective view of the wheel assembly of FIG. 3.
FIGS. 8a-8e are perspective views of the wheel assembly of FIG. 3 at various orientations.
FIG. 9 is a perspective view of a motor vehicle incorporating wheel assemblies in accordance with the invention.
FIG. 10 is a perspective view of an amphibious vehicle incorporating wheel assemblies in accordance with the invention.
FIG. 11 is a perspective view of another embodiment of a wheel assembly in accordance with the invention, the body including a rim and a tire.
FIG. 12 is a front perspective view of another embodiment of a wheel assembly in accordance with the invention, the body of the wheel including eight arc portions in sequential, alternating arrangement about a central hub.
FIG. 13 is a front perspective view of another embodiment of a wheel assembly in accordance with the invention, the body of the wheel including 14 arc portions in sequential, alternating arrangement about a central hub.
FIG. 14 is a perspective view of another embodiment of a wheel assembly in accordance with the invention, depicting a pair of skateboard wheels.
FIG. 15 is a perspective view of another embodiment of a wheel assembly in accordance with the invention, depicting a skateboard wheel having multiple layers of material types.

### DETAILED DESCRIPTION OF THE PREFERRED EMBODIMENTS

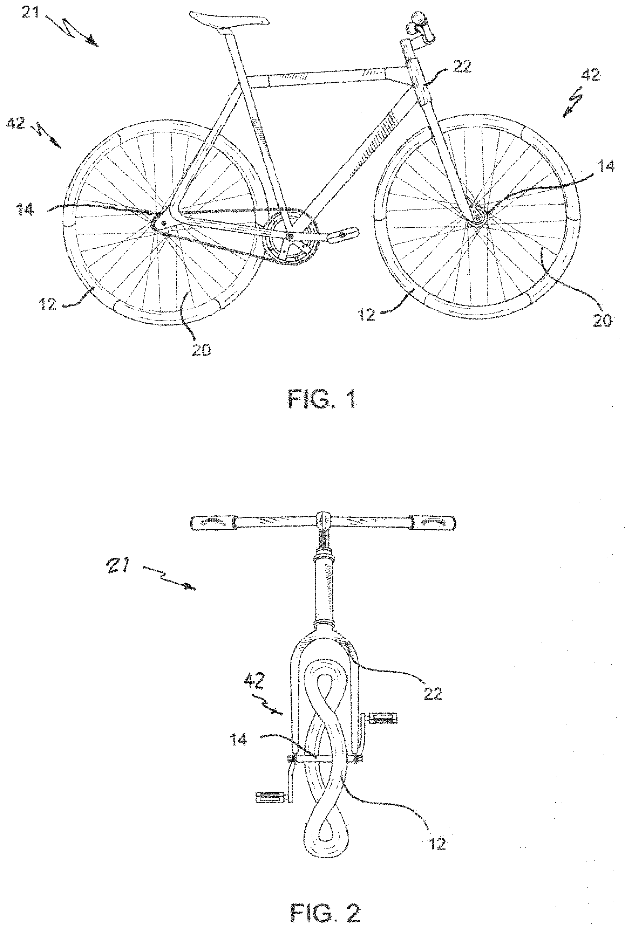

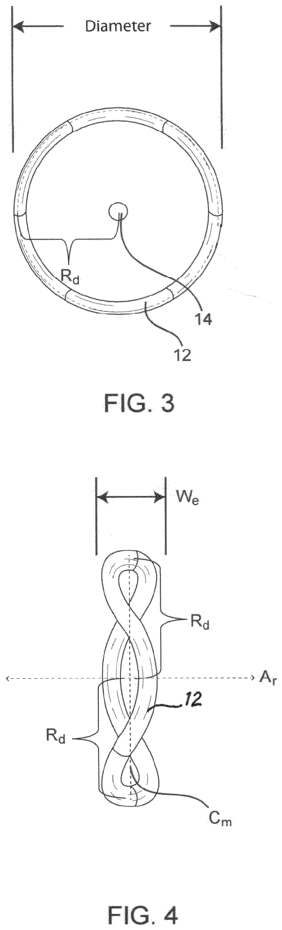

Referring now to the drawings, and particularly **FIGS. 1** and **2****,** illustrating a bicycle, **21** that includes two wheels **42** wherein each wheel **42** includes a hub **14** and an annular body **12** having an alternating pattern circumscribed about hub **14.** Wheels **42** each include a plurality of spokes **20** connecting to hub **14** and projecting relative wheels **42.** The outermost ends of spokes **20** attach along an inner edge of body **12.** The bicycle may include a front fork **22** sized to accommodate an effective width (**W**ₑ) of body **12** as shown in **FIG. 4****.** On hard surfaces, wheel **42** provides a broad track, the effective width (**W**ₑ), while maintaining a relatively thin contact area with a surface upon which bicycle **21** may ride and this results in less friction than a traditional wheel with a comparable effective width.

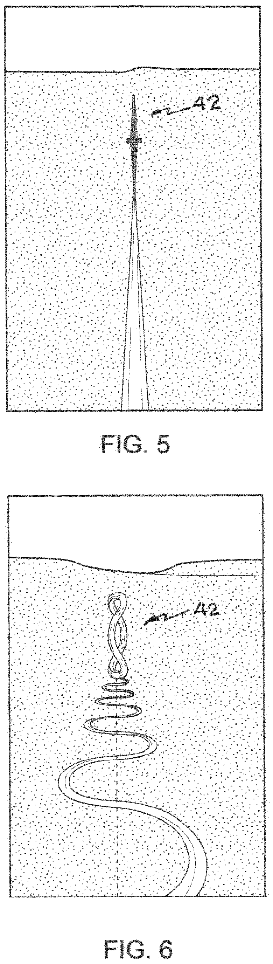

On soft surfaces, e.g., sand, the effective width (**W**ₑ) of wheel **42** enables bicycle **21** to travel smoothly without undue sinking into the soft material (see, **FIGS. 5-7**), while providing substantial traction, for example, in scenarios in which wheel **42** begins to slip, the wheel's contact area with the soft surface increases up to the effective width (**W**ₑ), providing additional traction.

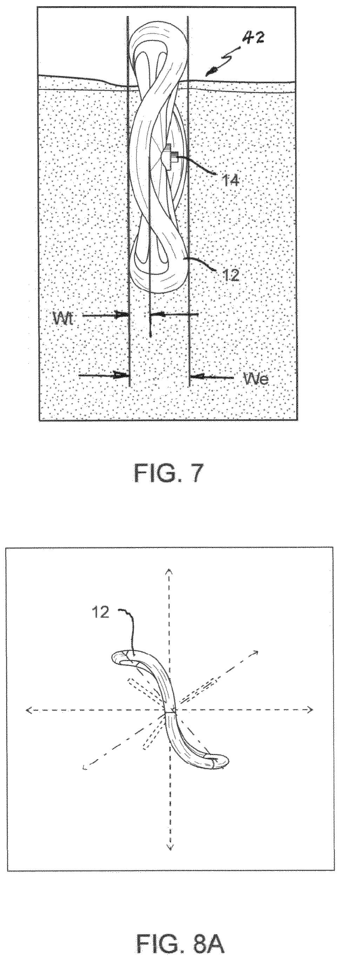

**FIG. 7** depicts wheel **42** from a front view. When in motion, the alternating arc portions of wheel **42** produces the alternating pattern on its rolling surface, as shown in **FIG. 6****.** As further shown in **Fig. 7****,** wheel **42,** as said, has effective width **(We)** but has less contact surface area **(Wt),** and therefore less fluid dynamic drag, as compared with a conventional wheel of similar width.

With reference to **FIGS. 3** and **4****,** body **12** is coupled to hub **14,** and rotates about an axis of rotation (**Aᵣ**) at a constant radial distance (**R_{d})** from the axis of rotation A**ᵣ**. The body **12** defines a median circle (**Cₘ**) centered on the plane of rotation and is transverse to the axis of rotation (**Aᵣ**). The alternating pattern of body **12** is evenly distributed across the median circle. In an exemplary embodiment, the alternating pattern is a series of alternating curved portions disposed on opposing sides of the median circle (**Cₘ**), forming a wave pattern having a constant amplitude and a constant frequency.

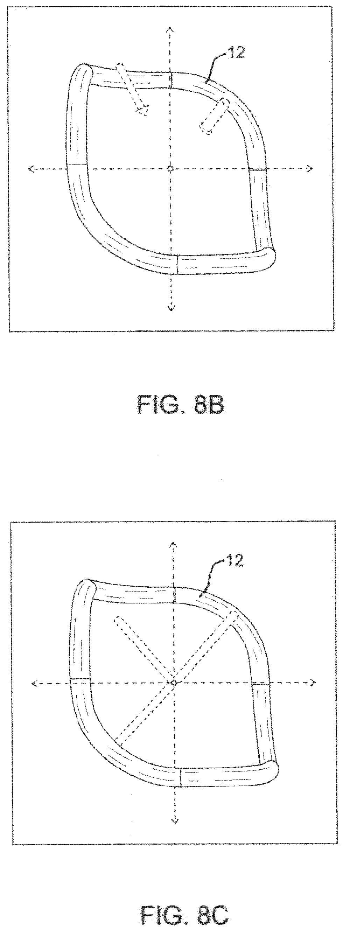

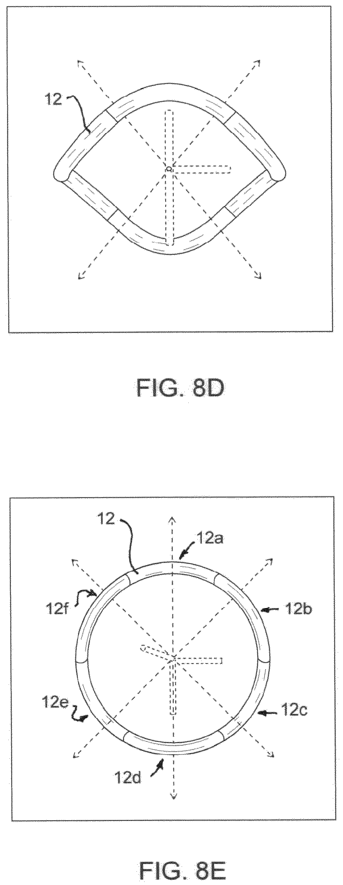

With reference now to **FIGS. 8A-E****,** body **12** may include six alternating portions in sequential alignment which extend on alternating sides of median circle (**Cₘ**) see **Fig. 4****.** Each portion is shaped as an arc having an arc angle that may comprise 90 degrees as shown in the exemplary embodiment in **FIG. 8E****,** where arc portions that are located diametrically opposite on body **12** are in mutually parallel orientation to one another, e.g. opposing arc portions: **12a** & **12d, 12b** & **12e,** and **12c** & **12f)**

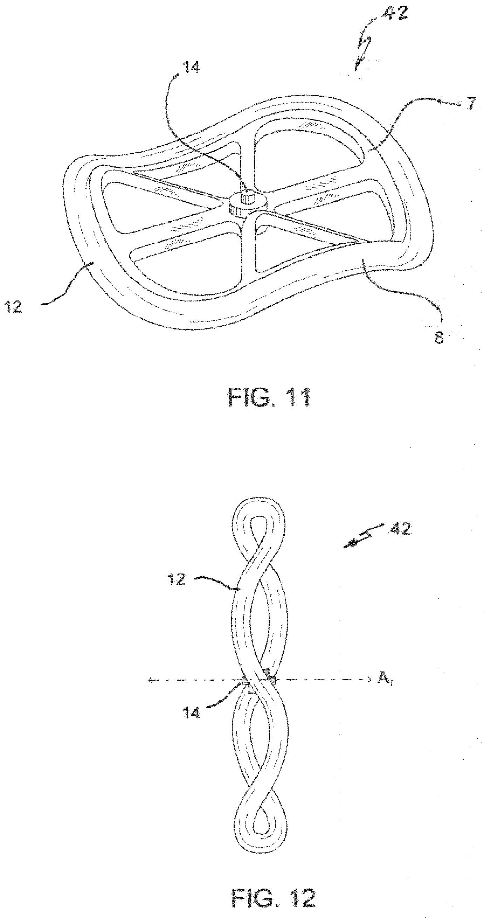

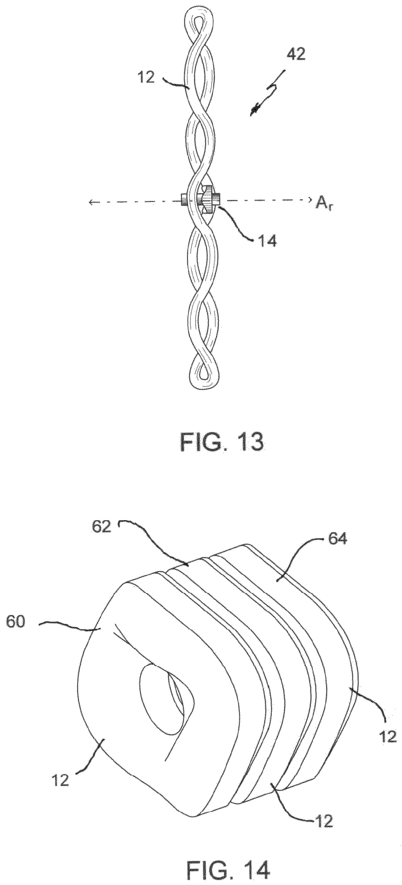

The amplitude and frequency of the portions can vary across embodiments as well as within. The shape of body **12** can vary in other embodiments. For example, the number and shapes of the alternating portions can vary. For example, in **FIG. 12** wheel **42** is depicted as having a plurality of arc portions disposed in an alternating arrangement about hub **14.** In **FIG. 13****,** wheel **42** is depicted as having a greater number of arc portions disposed in an alternating arrangement about hub **14.**

In addition, the amplitude and frequency of the portions can vary across embodiments as well as within an embodiment. Furthermore, the alternating portions need not be limited to a curved shape. Any other shape can be used such as squared, pie, or cantilevered portions, among others. Moreover, one or more portions of body **12** can extend around median circle (**Cₘ**) at prescribed location(s), interspaced between alternating portions.

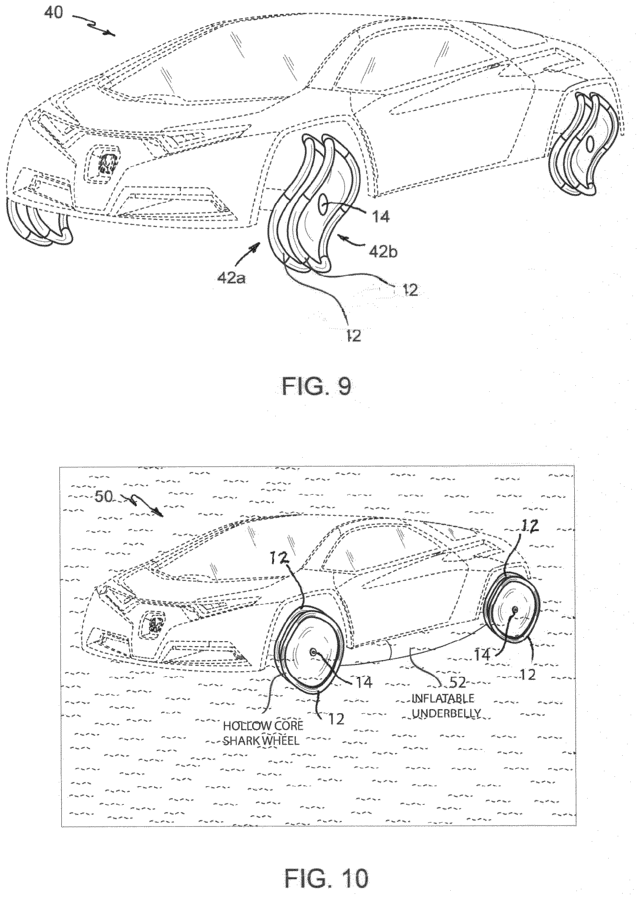

With reference now to **FIG. 9****,** a motor vehicle **40** may have four dual wheel sets, as shown. Each wheel set may have a pair of wheels **42** mounted in side-by-side alignment. The bodies **12** may incorporate the alternating pattern discussed above. The bodies **12** can share a hub **14,** or the bodies **12** can each have a separate hub **14.** In other embodiments incorporating dual wheel configurations, an inner wheel **42a** and an outer wheel **42b** need not have the same shape or configuration alignment.

With reference now to **FIG. 10****,** an amphibious vehicle **50** may include four dual wheels sets as shown, each with a pair of bodies **12** mounted in alignment with each other. The bodies **12** may incorporate the alternating pattern discussed above. The bodies **12** can share a hub **14** or each can be mounted to a separate hub **14.** Bodies **12** may have a shape that provides propulsion when the vehicle is in water. The vehicle **50** may include an inflatable underbelly support **52** mounted to the vehicle's undercarriage. The support **52** may be configured and sized to aid in floatation of vehicle **50.**

With reference now to **FIG. 11****,** wheel **42** may include a hub **14,** a rim **7,** and a tire **8.** Rim **7** and tire **8** cooperatively may define the alternating pattern as discussed above. Body **12** can accommodate pneumatic tires or other types. In a detailed aspect of an exemplary embodiment, body **12** may provide rim **7** supporting a pneumatic tire and inner tube. Alternatively, body **12** may be designed for tubular tires, which attach to rim 7 by adhesive or other approaches known in the art. The body **12** can be formed of other variations of tires and rim configurations known in the art and can be used without departing from the scope of the invention as herein described and illustrated.

With reference now to **FIG. 14****,** three skateboard wheels **60, 62** and **64** are disposed in alignment with each other. These wheels incorporate an alternating pattern, as discussed above. The bodies **12** can share a hub, or each can have a separate hub. In **FIG. 14****,** the wheels **60, 62, 64** are positioned to be mounted adjacent to each other on an axle of a skateboard truck. In other embodiments incorporating dual wheel configurations, an inner wheel and an outer wheel need not have the same shape or alignment.

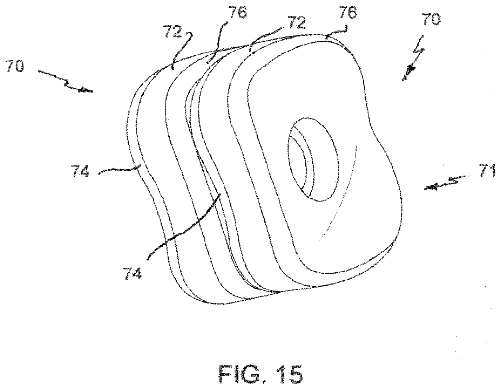

With reference now to **FIG. 15****,** wheels **70** for a skateboard are shown. The wheels **70** may be formed of layers of materials, in which the layers are disposed in alignment about an axis of rotation. In an exemplary embodiment, the layers may be aligned with sidewalls **71** of whee **70.** The layers may incorporate materials having different material parameters, such as, elasticity, stiffness, pliability, hardness (durometer), among others. The wheel **70** may include a center layer **72** that is comparatively softer than adjacent layers **74, 76.**

Although the invention has been disclosed in detail with reference only to exemplary embodiments, those skilled in the art will appreciate that various other embodiments can be provided without departing from the scope of the invention. Accordingly, the invention is defined primarily by the claims set forth below.

## Claims

1. A vehicular wheel assembly, comprising:
a central hub (14) defining the axis of rotation; and
a body (12) coupled to the central hub (14) to rotate about the axis of rotation, the body forming an alternating pattern circumscribed about the central hub, the body (12) having a constant radial distance from the axis of rotation (Ar) and defining a median circle (Cm) centered on and transverse to the axis of rotation (Ar),
**characterised in that** the
alternating pattern is a series of alternating curved portions disposed on opposite sides of the median circle (Cm) to define a wave pattern having a constant amplitude and a constant frequency, relative to the median circle (Cm).

2. The vehicular wheel assembly (50) as defined in claim 1, wherein the body (12) is formed of a plurality of arcs connected in sequential, adjacent alignment to circumscribe the central hub (12), each arc having an arc center that is spaced apart from the axis of rotation (Ar), such that adjacent arcs have arc center on opposing sides of the body.

3. The vehicular wheel assembly as defined in claim 1, wherein the body (12) has an effective width (We) to diameter ratio of at least 0.2.

4. The vehicular wheel assembly as defined in in claim 1, wherein the body (12) defines an effective width (We) greater than a body width (Wb).

5. The vehicular wheel assembly as defined in claim 1, further comprising a second body (12) coupled to the central hub positioned adjacent to the first body (12), the second body (12) mounted to rotate about the axis of rotation, the second body (12) forming an alternating pattern circumscribed about the central hub (12), the alternating pattern of the second body defines a median circle (Cm) centered about the central hub at a constant radial distance from the axis of rotation, and is continuously curved in both an axial and circumferential direction.

6. A vehicular wheel assembly, comprising:
a central hub (14) defining the axis of rotation; and
a body (12) coupled to the central hub (14) to rotate about the axis of rotation, the body (12) having a plurality of alternating curved portions connected in sequential, adjacent alignment to circumscribe the central hub (14), each alternating curved portion having an arc center that is spaced apart from the axis of rotation (Ar) and defining a median circle (Cm) centered on and transverse to the axis of rotation (Ar), such that adjacent alternating curved portions have arc centers on opposing sides of the body (12), **characterised in that** the adjacent arcs form an alternating pattern disposed on opposite sides of the median circle (Cm) to define a wave pattern having a constant amplitude and a constant frequency, relative to median circle (Cm).

7. The vehicular wheel assembly as defined in claim 6. wherein the body (12) defines an effective width (We) greater than a body width (Wb).

8. The vehicular wheel assembly as defined in claim 6. wherein each arc of the plurality of arcs has an arc angle of 90 degrees.

9. The vehicular wheel assembly as defined in claim 8. wherein the plurality of arcs consists of six arcs.

10. The vehicular wheel assembly as defined in claim 6. wherein the plurality of arcs includes more than six arcs.

11. The vehicular wheel assembly as defined in claim 6, further comprising a second body (12) coupled to the central hub (14) positioned adjacent to the first body (12), the second body (12) mounted to rotate about the axis of rotation, the second body (12) forming an alternating pattern disposed on opposite sides of the median circle (Cm) to define a wave pattern having a constant amplitude and a constant frequency, relative to the median circle (Cm).

12. A vehicular wheel assembly (50), comprising:
a central hub (52) defining the axis of rotation; and
a body including a rim (54) coupled to the central hub (52) and a tire (56) mounted to the rim (54) to rotate about the axis of rotation (Ar), the body forming an alternating pattern circumscribed about the central hub (52), the alternating pattern of the body defines a median circle (Cm) centered about the central hub (52) at a constant radial distance from the axis of rotation (Ar), **characterised in that** the alternating pattern is a series of alternating curved portions disposed on opposite sides of the median circle (Cm) to define a wave pattern having a constant amplitude and a constant frequency, relative to the median circle (Cm).

13. The vehicular wheel assembly (50) as defined in claim 12, wherein the alternating pattern is a plurality of arcs connected in sequential, adjacent alignment circumscribing the central hub (52), each arc having an arc center that is spaced apart from the axis of rotation, such that adjacent arcs have arc center on opposing sides of the body.

## Patentansprüche

1. Fahrzeugradanordnung, Folgendes umfassend:
eine zentrale Nabe (14), die die Drehachse definiert; und
einen Körper (12), der mit der zentralen Nabe (14) gekoppelt ist, um sich um die Drehachse zu drehen, wobei der Körper ein um die zentrale Nabe herum umschriebenes, alternierendes Muster ausbildet, wobei der Körper (12) einen konstanten radialen Abstand von der Drehachse aufweist und einen auf der Drehachse (Ar) zentrierten und quer dazu angeordneten Mittelkreis (Cm) definiert, **dadurch gekennzeichnet, dass** das alternierende Muster eine Reihe von alternierenden gekrümmten Abschnitten ist, die auf einander gegenüberliegenden Seiten des Mittelkreises (Cm) angeordnet sind, um, bezogen auf den Mittelkreis (Cm), ein Wellenmuster mit einer konstanten Amplitude und einer konstanten Frequenz zu definieren.

2. Fahrzeugradanordnung (50) nach Anspruch 1, wobei der Körper (12) aus mehreren Bögen, die in sequenzieller, benachbarter Ausrichtung verbunden sind, ausgebildet ist, um die zentrale Nabe (12) zu umschreiben, wobei jeder Bogen eine Bogenmitte aufweist, die so von der Drehachse (Ar) beabstandet ist, dass benachbarte Bögen auf gegenüberliegenden Seiten des Körpers eine Bogenmitte aufweisen.

3. Fahrzeugradanordnung nach Anspruch 1, wobei der Körper (12) ein effektives Verhältnis von Breite (We) zu Durchmesser von mindestens 0,2 aufweist.

4. Fahrzeugradanordnung nach Anspruch 1, wobei der Körper (12) eine größere effektive Breite (We) als eine Körperbreite (Wb) definiert.

5. Fahrzeugradanordnung nach Anspruch 1, ferner einen zweiten Körper (12) umfassend, der an der zentralen Nabe angrenzend an den ersten Körper (12) gekoppelt ist, wobei der zweite Körper (12) befestigt ist, um sich um die Drehachse zu drehen, wobei der zweite Körper (12) ein alternierendes Muster auf einander gegenüberliegenden Seiten des Mittelkreises (Cm) ausbildet, wobei das alternierende Muster des zweiten Körpers einen um die zentrale Nabe (12) in einem konstanten radialen Abstand von der Drehachse zentrierten Mittelkreis (Cm) definiert und sowohl in axialer als auch in Umfangsrichtung kontinuierlich gekrümmt ist.

6. Fahrzeugradanordnung, Folgendes umfassend:
eine zentrale Nabe (14), die die Drehachse definiert; und
einen Körper (12), der mit der zentralen Nabe (14) gekoppelt ist, um sich um die Drehachse zu drehen, wobei der Körper (12) mehrere alternierend gekrümmte Abschnitte aufweist, die in sequenzieller, benachbarter Ausrichtung verbunden sind, um die zentrale Nabe (14) zu umschreiben, wobei jeder alternierend gekrümmte Abschnitt einen Bogenmittelpunkt aufweist, der von der Drehachse (Ar) beabstandet ist, und einen auf der Drehachse (Ar) zentrierten und quer dazu verlaufenden Mittelkreis (Cm) definiert, so dass benachbarte, alternierend gekrümmte Abschnitte Bogenmittelpunkte auf gegenüberliegenden Seiten des Körpers (12) aufweisen, **dadurch gekennzeichnet, dass** die benachbarten Bögen ein alternierendes Muster ausbilden, das auf einander gegenüberliegenden Seiten des Mittelkreises (Cm) angeordnet ist, um ein Wellenmuster mit einer konstanten Amplitude und einer konstanten Frequenz relativ zum Mittelkreis (Cm) zu definieren.

7. Fahrzeugradanordnung nach Anspruch 6, wobei der Körper (12) eine effektive Breite (We) definiert, die größer ist als eine Körperbreite (Wb).

8. Fahrzeugradanordnung nach Anspruch 6, wobei jeder Bogen der mehreren Bögen einen Bogenwinkel von 90 Grad aufweist.

9. Fahrzeugradanordnung nach Anspruch 8, wobei die mehreren Bögen aus sechs Bögen bestehen.

10. Fahrzeugradanordnung nach Anspruch 6, wobei die mehreren Bögen mehr als sechs Bögen enthalten.

11. Fahrzeugradanordnung nach Anspruch 6, ferner einen zweiten Körper (12) umfassend, der an der zentralen Nabe (14) angrenzend an den ersten Körper (12) gekoppelt ist, wobei der zweite Körper (12) befestigt ist, um sich um die Drehachse zu drehen, wobei der zweite Körper (12) ein alternierendes Muster auf einander gegenüberliegenden Seiten des Mittelkreises (Cm) ausbildet, um ein Wellenmuster mit einer konstanten Amplitude und einer konstanten Frequenz relativ zum Mittelkreis (Cm) zu definieren.

12. Fahrzeugradanordnung (50), Folgendes umfassend:
eine zentrale Nabe (52), die die Drehachse definiert; und
einen Körper, der Folgendes enthält: eine Felge (54), gekoppelt mit der zentralen Nabe (52), und einen Reifen (56), der an der Felge (54) montiert ist, um sich um die Drehachse (Ar) zu drehen, wobei der Körper ein alternierendes Muster ausbildet, das um die zentrale Nabe (52) umschrieben ist, wobei das alternierende Muster des Körpers einen Mittelkreis (Cm) definiert, der um die zentrale Nabe (52) in einem konstanten radialen Abstand von der Drehachse (Ar) zentriert ist, **dadurch gekennzeichnet, dass** das alternierende Muster eine Reihe alternierender gekrümmter Abschnitte ist, die auf einander gegenüberliegenden Seiten des Mittelkreises (Cm) angeordnet sind, um ein alternierendes Muster mit einer konstanten Amplitude und einer konstanten Frequenz relativ zum Mittelkreis (Cm) zu definieren.

13. Fahrzeugradanordnung (50) nach Anspruch 12, wobei das alternierende Muster aus mehreren Bögen besteht, die in sequenzieller, benachbarter Ausrichtung verbunden sind und die zentrale Nabe (52) umschreiben, wobei jeder Bogen eine Bogenmitte aufweist, die so von der Drehachse beabstandet ist, dass benachbarte Bögen auf gegenüberliegenden Seiten des Körpers eine Bogenmitte aufweisen.

## Revendications

1. Ensemble roue de véhicule, comprenant :
un moyeu central (14) définissant l'axe de rotation ; et
un corps (12) couplé au moyeu central (14) pour tourner autour de l'axe de rotation, le corps formant un motif alternatif circonscrit autour du moyeu central, le corps (12) présentant une distance radiale constante par rapport à l'axe de rotation et définissant un cercle médian (Cm) centré sur l'axe de rotation (Ar) et transversal à celui-ci, **caractérisé en ce que** le motif alternatif est une série de parties incurvées alternatives disposées sur les côtés opposés du cercle médian (Cm) pour définir un motif d'onde présentant une amplitude et une fréquence constantes, par rapport au cercle médian (Cm).

2. Ensemble roue de véhicule (50) selon la revendication 1, dans lequel le corps (12) est formé d'une pluralité d'arcs reliés en alignement séquentiel adjacent pour circonscrire le moyeu central (12), chaque arc comportant un centre d'arc qui est espacé de l'axe de rotation (Ar), de sorte que les arcs adjacents présentent un centre d'arc sur les côtés opposés du corps.

3. Ensemble roue de véhicule selon la revendication 1, dans lequel le corps (12) présente un rapport largeur effective (We)/diamètre d'au moins 0,2.

4. Ensemble roue de véhicule selon la revendication 1, dans lequel le corps (12) définit une largeur effective (We) supérieure à une largeur de corps (Wb).

5. Ensemble roue de véhicule selon la revendication 1, comprenant en outre un second corps (12) couplé au moyeu central positionné de manière adjacente au premier corps (12), le second corps (12) étant monté pour tourner autour de l'axe de rotation, le second corps (12) formant un motif alternatif circonscrit autour du moyeu central (12), le motif alternatif du second corps définissant un cercle médian (Cm) centré autour du moyeu central à une distance radiale constante par rapport à l'axe de rotation, et étant continuellement incurvée dans les directions axiale et circonférentielle.

6. Ensemble roue de véhicule, comprenant :
un moyeu central (14) définissant l'axe de rotation ; et
un corps (12) couplé au moyeu central (14) pour tourner autour de l'axe de rotation, le corps (12) comportant une pluralité de parties incurvées alternatives reliées en alignement séquentiel et adjacent pour circonscrire le moyeu central (14), chaque partie incurvée alternative comportant un centre d'arc espacé de l'axe de rotation et définissant un cercle médian (Cm) centré sur l'axe de rotation (Ar) et transversal à celui-ci, de sorte que les parties incurvées alternatives adjacentes présentent des centres d'arc sur les côtés opposés du corps (12), **caractérisé en ce que** les arcs adjacents forment un motif alternatif disposé sur les côtés opposés du cercle médian (Cm) pour définir un motif d'onde présentant une amplitude et une fréquence constantes, par rapport au cercle médian (Cm).

7. Ensemble roue de véhicule selon la revendication 6, dans lequel le corps (12) définit une largeur effective (We) supérieure à une largeur de corps (Wb).

8. Ensemble roue de véhicule selon la revendication 6, dans lequel chaque arc de la pluralité d'arcs présente un angle d'arc de 90 degrés.

9. Ensemble roue de véhicule selon la revendication 8, dans lequel la pluralité d'arcs est constituée de six arcs.

10. Ensemble roue de véhicule selon la revendication 6, dans lequel la pluralité d'arcs comprend plus de six arcs.

11. Ensemble roue de véhicule selon la revendication 6, comprenant en outre un second corps (12) couplé au moyeu central (14) positionné de manière adjacente au premier corps (12), le second corps (12) étant monté pour tourner autour de l'axe de rotation, le second corps (12) formant un motif alternatif disposé sur les côtés du cercle médian (Cm) pour définir un motif d'onde présentant une amplitude et une fréquence constantes, par rapport au cercle médian (Cm).

12. Ensemble roue de véhicule (50), comprenant :
un moyeu central (52) définissant l'axe de rotation ; et
un corps comprenant une jante (54) couplée au moyeu central (52) et à un pneu (56) monté sur la jante (54) pour tourner autour de l'axe de rotation (Ar), le corps formant un motif alternatif, circonscrit autour du moyeu central (52), le motif alternatif du corps définissant un cercle médian (Cm) centré autour du moyeu central (52) à une distance radiale constante de l'axe de rotation (Ar), **caractérisé en ce que** le motif alternatif est une série de parties incurvées alternatives disposées sur les côtés opposés du cercle médian (Cm) pour définir un motif d'onde présentant une amplitude et une fréquence constantes, par rapport au cercle médian (Cm).

13. Ensemble roue de véhicule (50) selon la revendication 12, dans lequel le motif alternatif est constitué d'une pluralité d'arcs reliés en alignement séquentiel, adjacent, circonscrivant le moyeu central (52), chaque arc comportant un centre d'arc espacé de l'axe de rotation, de sorte que les arcs adjacents présentent un centre d'arc sur les côtés opposés du corps.
